# EUROPÄISCHE PATENTSCHRIFT

(11) **EP 4 315 211 B1**
(45) Veröffentlichungstag und Bekanntmachung des Hinweises auf die Patenterteilung: **12.11.2025**
(21) Anmeldenummer: 23701677.9
(22) Anmeldetag: 20.01.2023
(51) Int. Cl.: G06Q 10/20, G06Q 30/0601

(54) **VERFAHREN ZUR PRÄGUNG UND NUTZUNG FAHRZEUGBEZOGENER NON-FUNGIBLE-TOKENS UND INFORMATIONSTECHNISCHES SYSTEM**
METHOD FOR MINTING AND USING VEHICLE-RELATED NON-FUNGIBLE TOKENS, AND INFORMATION TECHNOLOGY SYSTEM
PROCÉDÉ D'ÉMISSION ET D'UTILISATION DE JETONS NON FONGIBLES ASSOCIÉS À UN VÉHICULE, ET SYSTÈME DE TECHNOLOGIE D'INFORMATIONS

(30) Priorität: 22.02.2022 DE 102022000646
(43) Veröffentlichungstag der Anmeldung: 07.02.2024
(73) Patentinhaber: Mercedes-Benz Group AG, 70372 Stuttgart (DE)
(72) Erfinder: FRIESEN, Viktor, 76139 Karlsruhe (DE); KOLLER, Micha, 72124 Pliezhausen (DE); REHBORN, Hubert, 71069 Sindelfingen (DE)
(74) Vertreter: Novagraaf Group
(86) Internationale Anmeldenummer: PCT/EP2023/051386
(87) Internationale Veröffentlichungsnummer: WO 2023/160917

(56) Entgegenhaltungen:
- DE-A1- 102013 003 063
- DE-A1- 102018 115 347
- US-A1- 2020 311 698
- US-B1- 11 232 503
- ANTONOPOULOS ANDREAS M ET AL: "Mastering Ethereum", MASTERING ETHEREUM : BUILDING SMART CONTRACTS AND DAPPS, 31 December 2018 (2018-12-31), XP055880605, ISBN: 978-1-4919-7194-9, Retrieved from the Internet <URL:https://dl.ebooksworld.ir/motoman/Mastering_Ethereum_Andreas.M.Antonopoulos.www.EBooksWorld.ir.pdf> [retrieved on 20220118]

## Beschreibung

Die Erfindung betrifft ein Verfahren zur Prägung und Nutzung fahrzeugbezogener Non-Fungible-Tokens nach der im Oberbegriff von Anspruch 1 näher definierten Art sowie ein informationstechnisches System zur Durchführung des Verfahrens.

Bestimmte digitale Währungen, beziehungsweise die jeweilige der digitalen Währung zugrundeliegende Blockchain, wie die Ethereum Blockchain, die Binance Smart Chain oder Solana, erlauben das Erzeugen sogenannter Non-Fungible-Tokens (NFT), was im Folgenden auch als Prägen bezeichnet wird. Bei einem NFT handelt es sich um ein nicht ersetzbares digitales Objekt. Zum Prägen des NFTs werden für das NFT relevante Informationen in Form von Informationsblöcken in die Blockchain der dem jeweiligen NFT zugrundeliegenden digitalen Währung integriert. Mit Hilfe von NFTs werden meist digital einfach zu kopierende Dateien wie computergenerierte Kunstwerke als Einzelstück gekennzeichnet und deren Besitz durch einen Verkauf des NFTs an einen bestimmten Akteur überschrieben.

Um das Speichern von unverhältnismäßig großen Datenmengen in der Blockchain zu vermeiden, kann ein in der Blockchain integrierter Informationsblock auch einen Link auf eine Blockchain-externe Ressource umfassen. Der Besitzer sowie alle Eigenschaften eines NFTs sind öffentlich einsehbar. Die Eigenschaften des NFTs sind nach der Prägung nicht mehr veränderbar.

Mit vorschreitender Akzeptanz von "Kryptowährungen" nimmt auch die Popularität von NFTs zu. So offenbaren beispielsweise die Patente US 10,505,726 B1 und US 11,113,754 B2 der Firma Nike Inc. alltagstaugliche Verfahren zur Nutzung von NFTs im Zusammenhang mit käuflich erwerbbaren physischen Gütern. Die Verfahren beschreiben die Erzeugung eines für einen Einzelhandelartikel wie einen Sportschuh repräsentativen NTF beim Kauf des Einzelhandelartikels durch eine Person. Die entsprechende Person umfasst eine eindeutige Nutzer-ID, der der entsprechende NFT zugeordnet wird. Hierdurch erhält der Käufer des Einzelhandelartikels einen eindeutigen digitalen Nachweis des Erwerbs des Einzelhandelartikels. In die Erzeugung eines jeweiligen NFTs können dabei Eigenschaften des Einzelhandelartikels, beispielsweise eine Farbe, ein Material, ein Hersteller, eine Modellbezeichnung, eine Größe oder dergleichen einfließen. Der Käufer des Einzelhandelartikels kann das dem Einzelhandelartikel zugeordnete NFT an Dritte weiterverkaufen. Dabei muss er nicht zwangsweise den physischen Einzelhandelartikel bzw. ein digitales Abbild davon an den Dritten mit übergeben. Die Verfahren beschreiben darüber hinaus die Nutzung eines digitalen Abbilds des physischen Einzelhandelartikels in einem Videospiel, das Erzeugen kombinierter digitaler Abbilder von Einzelhandelartikeln durch das Vermischen der Eigenschaften von zwei Ausgangseinzelhandelartikeln und das Beziehen digitaler Abbilder und entsprechender NFTs eines Sportschuhs auf einem Event.

Zudem offenbart die US 2020/311698 A1 das Erzeugen eines NFTs für ein Fahrzeug, durch das Fahrzeug. Hierzu umfasst das Fahrzeug einen Computer, welcher dazu in der Lage ist vom Fahrzeug erhobene Fahrzeugdaten einzulesen. Der Computer bildet dabei einen Knoten eines proof-of-stake Netzwerks zur Berechnung einer Blockchain aus. Der Computer bewirkt selbst das Prägen des NFTs. Mittels des NFTs lässt sich der Abnutzungsgrad des Fahrzeugs beschreiben und damit ein Restwert des Fahrzeugs, beispielsweise in Form von Geldeinheiten, dezentral nachverfolgen.

Zudem offenbart die DE 10 2018 115347 A1 Verfahren und Mittel zur Generierung und Verwaltung eines digitalen KFZ-Scheins, basierend auf der Blockchain-Technologie.

Das Ethereum Framework ist zudem detailliert beschrieben in: Antonopoulos Andreas M ET AL: "Mastering Ethereum", Mastering Ethereum: Building Smart Contracts and DApps, 1. Januar 2018 (2018-01-01), XP055880605, ISBN: 978-1-4919-7194-9.

Ferner offenbart die DE 10 2013 003063 A1 die Steuerung des Kommunikationsverhaltens eines Kraftfahrzeugs. Das Kraftfahrzeug ist dazu in der Lage mittels eines mobilen Endgeräts Nachrichten mit fahrzeugexternen Geräten auszutauschen. Die Häufigkeit mit der Nachrichten ausgetauscht werden, die dabei anfallende Datenmenge und/oder der jeweilige Nachrichtentyp sind dabei im Endgerät konfigurierbar. Die jeweilige Konfiguration ist in Form eines Konfigurationsdatensatzes abgespeichert. Es können nach Bedarf unterschiedliche Konfigurationsdatensätze durch eine zentreale Steuereinheit geladen werden und damit das Kommunikationsverhalten des mobilen Endgeräts angepasst werden.

Die US 11 232 503 B1 offenbart ein Produktkonfigurationssystem, in dem Produktkonfigurationen in einer Blockchain gespeichert werden. Beim Anlegen einer neuen Produktkonfiguration wird überprüft, ob diese mit einer der bestehenden Produktkonfigurationen übereinstimmt, um zu gewährleisten, dass eine Produktkonfiguration einzigartig ist.

Der vorliegenden Erfindung liegt die Aufgabe zugrunde, ein besonders sicheres und zuverlässigeres Verfahren und informationstechnisches System zur Prägung und Nutzung fahrzeugbezogener Non-Fungible-Tokens anzugeben, mit dessen Hilfe der Nutzerkomfort für Fahrzeugbesitzer gesteigert werden kann.

Erfindungsgemäß wird diese Aufgabe durch ein Verfahren zur Prägung und Nutzung fahrzeugbezogener Non-Fungible-Tokens mit den Merkmalen des Anspruchs 1 sowie ein informationstechnisches System mit den Merkmalen des Anspruchs 11 gelöst.

Vorteilhafte Ausgestaltungen und Weiterbildungen ergeben sich aus den hiervon abhängigen Ansprüchen.

Bei einem gattungsgemäßen Verfahren zur Prägung und Nutzung fahrzeugbezogener Non-Fungible-Tokens (NFT) prägt ein informationstechnisches System wenigstens ein einem Fahrzeug zugeordnetes NFT, das zumindest einen Besitznachweis, Nutzungsrechte und/oder Eigenschaften des Fahrzeugs umfasst, wobei wenigstens eine fahrzeuginterne Erfassungseinrichtung fahrzeugbezogene Rohdaten erfasst, eine fahrzeuginterne und/oder eine fahrzeugexterne Sammeleinrichtung zumindest eine Teilmenge der Rohdaten abspeichert, und wobei zumindest eine Teilmenge abgespeicherter Rohdaten aufbereitet werden, Aufbereitete-Daten in NFT-Eingangsdaten gewandelt werden und ein NFT unter Einbezug der NFT-Eingangsdaten geprägt wird. Ein solches gattungsgemäßes Verfahren wird erfindungsgemäß dadurch weitergebildet, dass eine fahrzeuginterne und/oder eine fahrzeugexterne Aggregiereinrichtung zumindest eine Teilmenge abgespeicherter Rohdaten zur Erzeugung Aufbereiteter-Daten aufbereitet, eine fahrzeuginterne Wandlungseinrichtung Aufbereitete-Daten in NFT-Eingangsdaten wandelt, eine fahrzeuginterne Übertragungseinrichtung die NFT-Eingangsdaten an eine fahrzeugexterne Prägeeinrichtung übermittelt, welche einen der NFTs unter Einbeziehen der NFT-Eingangsdaten in unveränderter Form prägt, und wobei
in einem der Non-Fungible-Token die zur Produktion eines Fahrzeugs konfigurierbaren Eigenschaften inkludiert werden und für ein Fahrzeug mit einer einmaligen Eigenschafts-Kombination die Produktion eines weiteren der einmaligen Eigenschafts-Kombination entsprechenden Fahrzeugs unterbunden wird, und wobei
ein solches Non-Fungible Token bei der Herstellung des Fahrzeugs geprägt wird.

Mit Hilfe des erfindungsgemäßen Verfahrens lassen sich für Fahrzeuge NFTs prägen, diese mit für die jeweiligen Fahrzeuge relevanten Informationen anreichern und den entsprechenden Fahrzeugen, beziehungsweise einem jeweiligen Fahrzeugnutzer, zuordnen. Dies ermöglicht die Bereitstellung völlig neuartiger Dienste für die Kunden eines Fahrzeugherstellers, wodurch sich die Kundenzufriedenheit und der Nutzerkomfort steigern lassen. Im Unterschied zu beispielsweise einem Sportschuh, Gemälde, Film, Musikstück oder dergleichen, handelt es sich bei einem Fahrzeug selbst um ein informationstechnisches System bzw. Teil eines größeren informationstechnischen Systems, welches an der Prägung eines sich selbst betreffenden NFTs beteiligt ist.

So kommt es bei der Prägung von objektbezogenen NFTs vermehrt zu Betrugsversuchen. Beispielsweise kann sich ein Betrüger für einen berühmten Künstler ausgeben und ein NFT eines Kunstwerks prägen und verkaufen, obwohl der Betrüger überhaupt nicht der Hersteller bzw. Besitzer des Kunstwerks ist. Ähnliche Probleme bestehen auch bei der Erzeugung von NFTs für Einzelhandelsartikel. So könnte ein Betrüger die zum Prägen eines einem jeweiligen Einzelhandelartikels zugeordneten NFTs nötigen Schritte, wie beispielsweise das Scannen eines Identifikationstags oder Aufnehmen eines Fotos, auch vor Ort in einem Laden durchführen, den Einzelhandelsartikel dann aber nicht kaufen. Indem das Objekt, für das ein jeweiliges NFT erzeugt werden soll, aktiv in die Generierung der NFTs einbezogen wird, lassen sich solche Betrugsversuche jedoch zuverlässig verhindern.

Mit Hilfe der fahrzeuginternen Erfassungseinrichtung werden fahrzeugbezogene Rohdaten erfasst. Bei der Erfassungseinrichtung kann es sich um einen Sensor handeln, und bei den Rohdaten um Messwerte des jeweiligen Sensors. Bei der Erfassungseinrichtung kann es sich auch um ein System handeln, welches Lesezugriff auf einen Datenbus und/oder ein physisches Speichermedium hat und die entsprechenden über den Bus übertragenen und/oder im Speichermedium abgespeicherten Daten ausliest. Das Fahrzeug kann eine oder auch mehrere Erfassungseinrichtungen aufweisen. Die jeweiligen Erfassungseinrichtungen können an einer beliebigen Stelle im Fahrzeug sitzen und in ein oder mehrere voneinander unabhängige Fahrzeuguntersysteme integriert oder verteilt sein. Von der oder den Erfassungseinrichtungen generierte Rohdaten werden dann von einer oder mehreren Sammeleinrichtungen abgespeichert.

Dabei kann eine Sammeleinrichtung Rohdaten von einer oder auch mehreren Erfassungseinrichtungen speichern. Zur Reduktion des Speicherbedarfs können dabei auch nicht mehr benötigte Teilmengen der Rohdaten verworfen werden. Je nachdem, was für eine Art von NFT geprägt werden soll, werden die hierzu erforderlichen Rohdaten von der Sammeleinrichtung an eine Aggregiereinrichtung übertragen und dort aufbereitet. Das Aufbereiten der Rohdaten kann beispielsweise das Wandeln in ein bestimmtes Dateiformat, das Komprimieren einer Dateigröße, eine Sortierung, eine Filterung, eine Integrierung oder eine sonstige Datenverarbeitung der Rohdaten umfassen.

Das Erfassen und Speichern von Daten kann vielfältigen datenschutzrechtlichen Einschränkungen unterliegen. Durch das Aufbereiten der Rohdaten lassen sich die Rohdaten so manipulieren, dass geltende Datenschutzrichtlinien erfüllt werden. Bevorzugt werden hierzu die Rohdaten so kurz wie möglich gespeichert.

Die Wandlungseinrichtung sammelt dann die von sämtlichen Aggregiereinrichtungen erzeugten Aufbereitete-Daten und erzeugt hieraus NFT-Eingangsdaten, die wiederum über die Übertragungseinrichtung an die fahrzeugexterne Prägeeinrichtung übermittelt werden. Die Übertragung der NFT-Eingangsdaten an die fahrzeugexterne Prägeeinrichtung kann kabelgebunden oder bevorzugt auch drahtlos erfolgen. Hierzu kommen bewährte Übertragungstechniken wie beispielsweise Mobilfunk, Wi-Fi, Bluetooth, NFC oder dergleichen in Frage. Die Datenerhebung, (zwischen-)Speicherung und Übertragung erfolgt bevorzugt durch kryptografische Authentifizierungs- und Verschlüsselungsmaßnahmen abgesichert.

Bei der fahrzeugexternen Prägeeinrichtung handelt es sich um ein Computersystem, welches dazu in der Lage ist, neue NFTs zu erzeugen, also mit Informationen angereicherte Datenblöcke in die einer Kryptowährung zugrundeliegende Blockchain zu integrieren. Dabei gehen die NFT-Eingangsdaten in unveränderter Form in den Prägeprozess des NFTs ein. Dies bedeutet, dass die NFT-Eingangsdaten eins zu eins in einen entsprechenden Informationsblock der Blockchain integriert werden. Ist beispielsweise eine Fahrzeugidentifikationsnummer Bestandteil der NFT-Eingangsdaten, so wird die entsprechende Fahrzeugidentifikationsnummer als Klartext in ein entsprechendes NFT integriert. Bei zu großen Datensätzen, beispielsweise bei einem Bild, kann auch ein entsprechender Link auf einen Online-Datenspeicher, auf dem das entsprechende Bild abgelegt ist, in das NFT integriert werden.

Die Nutzung von NFTs gegenüber der direkten Integration von fahrzeugbezogenen Informationen und/oder lieferkettenbezogener Informationen in eine Blockchain zur Dokumentation einer Echtheit und/oder Herkunft eines Produkts erlaubt dabei eine besonders flexible Gestaltung einer Folgenutzung der in der Blockchain (als NFT) gespeicherten Informationen.

Wie oben beschrieben ist es vorgesehen, dass in einem der NFTs die zur Produktion eines Fahrzeugs konfigurierbaren Eigenschaften inkludiert werden und für ein Fahrzeug mit einer einmaligen Eigenschafts-Kombination die Produktion eines weiteren der einmaligen Eigenschafts-Kombination entsprechenden Fahrzeugs unterbunden wird. Zu den Eigenschaften eines Fahrzeugs zählen beispielsweise die Motorisierung des Fahrzeugs, das gewählte Fahrwerk, die gewählte Sonderausstattung, der ausgewählte Fahrzeuglack und dergleichen. Es besteht die Möglichkeit, dass der Käufer eines Fahrzeugs eine einmalige Fahrzeugkonfiguration getroffen hat. Ist dies der Fall, so kann der Käufer festlegen, dass keine weiteren Fahrzeuge mit denselben Eigenschaften, sprich mit der einmaligen Eigenschafts-Kombination, durch den Fahrzeughersteller mehr produziert werden. Hierdurch wird ein besonderes Nutzungserlebnis für den Käufer des Fahrzeugs ermöglicht, da es keinen anderen Besitzer eines solchen Fahrzeugs und damit einen einem solchen Fahrzeug zugeordneten NFT geben kann. Selbstverständlich kann der Käufer des Fahrzeugs mit der einmaligen Eigenschafts-Kombination die von ihm besessenen NFTs weiterverkaufen.

Ein bei der Herstellung eines Fahrzeugs erstelltes NFT kann beispielsweise folgende Fahrzeugdaten enthalten, wie eine Fahrzeugidentifikationsnummer, eine Baureihe, ein Modell, eine Lackierung, eine Motorisierung, eine Ausstattung, eine Produktionsstätte, ein Datum und/oder Fertigstellungsuhrzeit, eine laufende Nummer des Fahrzeugs an dem Tag/Monat/Jahr oder dergleichen.

Eine vorteilhafte Weiterbildung des Verfahrens sieht vor, dass wenigstens eine fahrzeugexterne Erfassungseinrichtung in den Prozess zur Erzeugung Aufbereiteter-Daten eingebunden ist. Die fahrzeugexterne Erfassungseinrichtung sowie die fahrzeugexterne Sammeleinrichtung und/oder Aggregiereinrichtung können integraler Bestandteil einer zentralen Recheneinheit, beispielsweise eines Cloudservers oder Serververbunds, sein. Ein solcher Cloudserver kann beispielsweise von einem Fahrzeughersteller betrieben werden und zur Verwaltung von Fahrzeugflotteninformationen genutzt werden. Dies ermöglicht das Erfassen von mit der Verwaltung von Fahrzeugflotten einhergehenden Informationen. Zudem lassen sich umfangreiche Daten erfassen, die nur dem Fahrzeughersteller zur Verfügung stehen, beispielsweise Informationen, die bei der Herstellung der Fahrzeuge anfallen. Die einzelnen Erfassungseinrichtungen, Sammeleinrichtungen und/oder Aggregiereinrichtungen können somit an beliebiger Stelle in Fahrzeuge, Fahrzeuguntersysteme, einen Cloudserver, Serververbund oder Komponenten davon, als auch in mobile Endgeräte integriert sein. Es ist zumindest jedoch eine fahrzeuginterne Erfassungseinrichtung an der Erstellung der Aufbereiteten-Daten beteiligt, um der Wandlungseinrichtung zumindest eine für das jeweilige Fahrzeug repräsentative Information zukommen zu lassen, wie beispielsweise eine Fahrzeugidentifikationsnummer, ein kryptografischer privater Schlüssel des Fahrzeugs oder eine sonstige Kennung. Im einfachsten Fall kann es sich bei der fahrzeuginternen Erfassungseinrichtung also um eine Einrichtung zum Auslesen einer digitalen Information aus einem Datenspeicher handeln. Die NFT-Eingangsdaten werden von einer jeweiligen fahrzeuginternen Wandlungseinrichtung erzeugt und aus einem jeweiligen Fahrzeug, für das das jeweilige NFT gelten soll, an die fahrzeugexterne Prägeeinrichtung übermittelt.

Bei einer fahrzeugexternen Erfassungseinrichtung können fahrzeugextern erfasste Rohdaten auch an einzelne Fahrzeuge zur Weiterverarbeitung übertragen werden. Analog lassen sich auch fahrzeugintern erfasste Rohdaten an die zentrale Recheneinheit übertragen und dort weiterverarbeiten. Die fahrzeugextern erzeugten Aufbereiteten-Daten werden dann zur Wandlung in die NFT-Eingangsdaten jedoch wieder zurück an ein jeweiliges Fahrzeug übertragen. Dies stellt sicher, dass Betrüger keine dem entsprechenden Fahrzeug zugeordnete NFTs erzeugen können.

Entsprechend einer weiteren vorteilhaften Ausgestaltung des Verfahrens verfügen wenigstens zwei separate Fahrzeuguntersysteme jeweils über eine eigene Aggregiereinrichtung, wobei in einem jeweiligen Fahrzeuguntersystem erfasste Rohdaten durch die jeweilige Aggregiereinrichtung des Fahrzeuguntersystems aufbereitet werden. Hierdurch wird sichergestellt, dass keine Rohdaten ein jeweiliges Fahrzeuguntersystem verlassen können. Lokal anfallende Daten verbleiben also in einem jeweiligen Teilsystem des Fahrzeugs. Eine lokale Datenaufbereitung hat zwei Vorteile. Zum einen wird die Übertragung unverhältnismäßig großer Datensätze verhindert, da Aufbereitete-Daten einen geringeren Speicherplatzbedarf aufweisen als die Rohdaten an sich. In der Regel sind die Rohdaten vergleichsweise umfangreich und damit aus datenschutzrelevanter Sicht besonders kritisch. Verlassen die Rohdaten allerdings ein jeweiliges Teilsystem, in dem sie entstanden sind, nicht, so können auch keine Verletzungen des Datenschutzes drohen.

Eine weitere vorteilhafte Ausgestaltung des Verfahrens sieht ferner vor, dass Aufbereitete-Daten in der Aggregiereinrichtung temporär zwischengespeichert werden, bevor diese an die Wandlungseinrichtung übermittelt werden. Generell ist es möglich, dass eine jeweilige Aggregiereinrichtung die Rohdaten unmittelbar vor der Übertragung an die Wandlungseinrichtung aufbereitet. Hierdurch müssen von einer jeweiligen Aggregiereinrichtung jedoch vergleichsweise viele Rohdaten gespeichert werden. Die Aggregiereinrichtung kann jedoch während der Erfassung der Rohdaten auch ein oder mehrmals vor der Übertragung der Aufbereiteten-Daten an die Wandlungseinrichtung die Rohdaten aufbereiten und die Aufbereiteten-Daten zwischenspeichern. Dies ermöglicht es, nicht mehr benötigte Rohdaten und/oder nicht mehr benötigte Aufbereitete-Daten zu verwerfen und entsprechend Speicherplatz einzusparen.

Entsprechend einer weiteren vorteilhaften Ausgestaltung des Verfahrens wird mittels einer Konfiguriereinrichtung ein Konfigurationsdatensatz erzeugt, welcher eine Konfigurierung für eine jeweilige Erfassungseinrichtung, Sammeleinrichtung, Aggregiereinrichtung, Wandlungseinrichtung und/oder Übertragungseinrichtung umfasst, die von einer jeweiligen Einrichtung eingelesen wird, um das Verhalten der jeweiligen Einrichtung zur Prägung eines bestimmten NFTs zu steuern. Je nach gewünschtem Einsatzzweck bzw. Typ des zu erzeugenden NFTs ist die Sammlung und Verarbeitung bestimmter fahrzeugbezogener Rohdaten erforderlich. Mittels des Konfigurationsdatensatzes lassen sich dann die entsprechenden Einrichtungen so parametrieren, dass die zur Erzeugung, also Prägung des gewünschten NFTs erforderlichen Informationen gewonnen werden. Je nach Einsatzzweck und zu erzeugendes NFT ist es dabei nicht zwangsweise erforderlich, jede der Einrichtungen zur Erzeugung eines neuen NFTs neu zu konfigurieren.

Die Konfiguriereinrichtung kann fahrzeugintern oder fahrzeugextern ausgeführt sein. Die Konfiguriereinrichtung wird beispielsweise von einem Nutzer wie einem Fahrzeughalter, Fahrzeugbesitzer, Fahrzeugverkäufer, dem Fahrzeughersteller oder dergleichen bedient. Zum Bedienen der Konfiguriereinrichtung kann beispielsweise eine fahrzeuginterne Mensch-Maschine-Schnittstelle wie das Infotainmentsystem des Fahrzeugs oder auch eine Web-Application genutzt werden. Eine entsprechende Web-Application kann beispielsweise über einen auf einem Computer ausgeführten Browser oder auch durch eine auf einem Smartphone ausgeführte Applikation (App) bedient werden. Die Bedienung der Konfiguriereinrichtung kann in Abhängigkeit eines Autorisierungsgrads eines Nutzers und/oder seines Fachwissens unterschiedlich umfangreich gestaltet sein. So kann die Bedienung der Konfiguriereinrichtung für einen nicht autorisierten Laien besonders einfach gestaltet sein, und einem autorisierten Experten eine Fülle an Konfiguriermöglichkeiten dargeboten werden. Beispielsweise kann der Laie die Konfiguriereinrichtung über eine Bedienmaske bedienen und der Experte die jeweiligen Einrichtungen selbst programmieren, bis hin zur Definition von Parameterwerten und Konstanten.

Eine weitere vorteilhafte Ausgestaltung des erfindungsgemäßen Verfahrens sieht ferner vor, dass ein Konfigurationsdatensatz zumindest eine der folgenden Informationen umfasst:
- eine Definition der zu erzeugenden NFT-Eingangsdaten;
- eine Definition von Ereignissen, wann ein NFT geprägt werden soll;
- eine Definition der zu erfassenden Rohdaten;
- eine Definition einer von einer Aggregiereinrichtung zur Aufbereitung der Rohdaten eingesetzten Aggregierfunktion; und/oder
- eine Definition einer von der Wandlungseinrichtung zur Wandlung der Aufbereiteten-Daten in NFT-Eingangsdaten eingesetzten Wandlungsfunktion.

Eine Entscheidung, welche NFTs erzeugt werden sollen, kann nach einem Top-down oder Bottom-up Ansatz erfolgen. Der Top-down Ansatz sieht vor, dass ein Nutzer angibt, welche gewünschten NFTs erzeugt werden sollen. Die Konfiguriereinrichtung entscheidet daraufhin selbstständig, welche zur Erzeugung der jeweiligen NFTs erforderlichen Rohdaten erfasst werden müssen und wie diese weiterverarbeitet werden müssen. Der Bottom-up Ansatz hingegen sieht vor, dass ein Nutzer der Konfiguriereinrichtung mitteilt, welche Rohdaten während der Fahrzeugnutzung erfasst werden sollen und wie diese weiterverarbeitet werden sollen. Je nach den getätigten Einstellungen ist dann das Prägen unterschiedlicher NFTs möglich.

Entsprechend einer weiteren vorteilhaften Ausgestaltung des Verfahrens wird ein vordefinierter Konfigurationsdatensatz aus einer Liste vordefinierter Konfigurationsdatensätze von der Konfiguriereinrichtung erzeugt und von den Einrichtungen eingelesen. Dies ermöglicht eine besonders intuitive und einfache Bedienung der Konfiguriereinrichtung durch einen Laiennutzer unter Verwendung einer entsprechenden Eingabemaske. So wählt der Laie beispielsweise die gewünschten zu prägenden NFTs aus, woraufhin die Konfiguriereinrichtung die entsprechenden vordefinierten Konfigurationsdatensätze lädt, sodass die Erfassungseinrichtung, Sammeleinrichtung, Aggregiereinrichtung, Wandlungseinrichtung und Übertragungseinrichtung das Prägen der entsprechenden gewünschten NFTs ermöglichen.

Ein Konfigurationsdatensatz kann für eine Erfassungseinrichtung beispielsweise festlegen, in welchem System die Erfassungseinrichtung ausgeführt werden soll (also bspw. im Fahrzeug, auf einem Cloudserver, in einem bestimmten Steuergerät oder dergleichen), ein Typ und eine Menge von Rohdaten, die zu erfassen sind und zu welchen Bedingungen und/oder Zeitpunkten die jeweiligen Rohdaten erfasst werden sollen und an welche Sammeleinrichtung(en) die Rohdaten übertragen werden sollen. Ein Konfigurationsdatensatz kann für eine Sammeleinrichtung beispielsweise festlegen in welchem System die Sammeleinrichtung ausgeführt werden soll, von welchen Erfassungseinrichtungen Informationen empfangen werden sollen, welcher Typ und welche Menge von Rohdaten von einer jeweiligen Erfassungseinrichtung empfangen werden soll und zu welchen Bedingungen Rohdaten gespeichert oder verworfen werden sollen, eine jeweilige Aggregiereinrichtung, an die gespeicherte Rohdaten weitergeleitet werden sollen und zu welchen Bedingungen und/oder Zeitpunkten das Weiterleiten welcher Informationen an eine jeweilige Aggregiereinrichtung erfolgen soll.

Ein Konfigurationsdatensatz kann für eine Aggregiereinrichtung beispielsweise festlegen in welchem System die Aggregiereinrchtung ausgeführt werden soll, von welchen Sammeleinrichtungen Rohdaten empfangen werden sollen, wobei dabei auch ein Typ der Rohdaten und eine zu verarbeitende Rohdatenmenge definiert werden kann, eine zur Aufbereitung der Rohdaten zu verwendende Aggregierfunktion und das genaue Verhalten einer jeweiligen Aggregierfunktion. Hierzu zählen beispielsweise die Menge der Rohdaten, von denen eine jeweilige Aggregierfunktion abhängt, eine Berechnungsvorschrift, die angibt, wie aus Rohdaten Aufbereitete-Daten erzeugt werden sollen, eine Menge an Zeitpunkten und/oder Bedingungen die festlegen, wann eine jeweilige Aggregierfunktion ausgeführt werden soll sowie wann welche Rohdaten nach ihrer Verwendung gelöscht werden können.

Ein Konfigurationsdatensatz kann für eine Wandlungseinrichtung beispielsweise festlegen, in welchem System die Wandlungseinrichtung ausgeführt werden soll, von welchen Aggregiereinrchtungen Aufbereitete-Daten erhalten werden sollen, nach welcher Wandlungsfunktion aus Aufbereiteten-Daten NFT-Eingangsdaten erzeugt werden sollen, und/oder eine Menge an Ereignissen und/oder Bedingungen zu welchen Zeitpunkten das Prägen eines NFTs veranlasst werden soll.

Ein Konfigurationsdatensatz kann für eine Übertragungseinrichtung beispielsweise festlegen an welche Prägeeinrichtung die zum Prägen eines NFT zu verwendenden NFT-Eingangsdaten zu übertragen sind.

Eine weitere vorteilhafte Ausgestaltung des Verfahrens sieht ferner vor, dass ein Nutzer das Prägen eines der NFTs manuell initiiert oder vor einer automatischen Prägung eines der NFTs eine Abfrage zur Bestätigung der Prägung des NFTs an den Nutzer gestellt wird. Mit anderen Worten ist eine Eingabe einer manuellen Bedienhandlung seitens des Nutzers erforderlich, bevor ein fahrzeugbezogenes NFT geprägt wird. Hierdurch wird dem Nutzer volle Kontrolle gegeben, um das unerwünschte Prägen von NFTs für sein Fahrzeug zu verhindern. Da in der Regel eine Blockchain öffentlich einsehbar ist, kann der Nutzer damit verhindern, dass Dritte, die mit den NFT-Eingangsdaten verknüpften Informationen aus der Blockchain auslesen können, wenn er dies nicht wünscht. Auch kann ein Nutzer das Prägen bestimmter NFTs wünschen, eine Veröffentlichung bestimmter Informationen in Form von NFT-Eingangsdaten in der Blockchain jedoch vermeiden wollen. So kann der Nutzer das Prägen der von ihm erwünschten NFTs initiieren bzw. erlauben und das Prägen solcher NFTs, die durch den Nutzer unerwünscht sind, vermeiden.

Entsprechend einer weiteren vorteilhaften Ausgestaltung des Verfahrens wird ein privater Schlüssel, mit dessen Hilfe eine Transaktion eines der NFTs an Dritte veranlassbar ist, in einem fahrzeuginternen Hardwarewallet und/oder in einem Wallet, auf welches aus dem Fahrzeug heraus Zugriff besteht, gespeichert. Hierdurch wird nicht nur das Fahrzeug als informationstechnisches System in die Erstellung bzw. Prägung des NFTs integriert, sondern auch die Nutzung des NFTs heraus aus dem Fahrzeug ermöglicht. Eine besonders komfortable Verfügung über NFTs ist mittels eines fahrzeugintegrierten Hardwarewallets möglich. In diesem Hardwarewallet wird dann der zum Veranlassen von Transaktionen benötigte private Schlüssel gespeichert. Eine Recheneinheit des Fahrzeugs kann jedoch auch, beispielsweise über eine Telematikeinheit, mit dem Server eines Dienstleistungsanbieters in Kommunikation stehen, der ein Nutzerkonto, dem die entsprechenden NFTs zugeordnet sind, verwaltet. Die Recheneinheit des Fahrzeugs kann beispielsweise auch mit einem mobilen Endgerät in Kommunikationsverbindung stehen, welches ein entsprechendes Hardwarewallet umfasst.

Zur Tätigung von Transaktionen kann es erforderlich sein, dass sich ein Nutzer authentifizieren muss. Hierzu können gewohnte Authentifizierungsmethoden wie die Eingabe von Passwörtern, das Lesen biometrischer Erkennungsmerkmale, das Scannen von Kodierungen oder dergleichen zur Anwendung kommen.

Bevorzugt wird bei Eintreffen zumindest eines der folgenden Ereignisse ein NFT geprägt:
- Verkauf des Fahrzeugs;
- Durchführen einer Reparatur oder Wartung am Fahrzeug;
- Aufenthalt mit dem Fahrzeug an einem festgelegten Ort;
- Erreichen eines festgelegten Zeitpunkts oder Verstreichen einer festgelegten Zeitdauer;
- Zurücklegen, mit dem Fahrzeug, einer festgelegten Wegstrecke;
- Eintreffen oder Ausbleiben einer bestimmten Fahrzeugfunktion; und/oder
- Übertreffen oder Unterschreiten einer Fahrzeugleistung im Vergleich zu einer jeweiligen Fahrzeugleistung der Fahrzeuge einer Fahrzeugflotte.

Es lässt sich ein NFT prägen, wenn das Fahrzeug verkauft wird oder verschenkt wird, also ein Fahrzeughalterwechsel stattfindet. Hierdurch lassen sich mit NFTs die genauen Besitzer des Fahrzeugs nachvollziehen.

Es können auch NFTs geprägt werden, wenn Teile und/oder Komponenten des Fahrzeugs repariert, gewartet oder auf eine sonstige Art und Weise ausgetauscht oder manipuliert werden. Hierzu zählt beispielsweise auch das Durchführen einer Softwareaktualisierung oder die Außerdienststellung/Verschrottung des Fahrzeugs. Hierdurch lässt sich sicherstellen, dass nur autorisierte Reparatur- oder Wartungsarbeiten am Fahrzeug durchgeführt werden. Beispielsweise kann das Erzeugen entsprechender NFTs nur durch eine autorisierte Werkstatt möglich sein. Selbstverständlich können Änderungen am Fahrzeug physisch ohne das Prägen neuer NFTs durchgeführt werden. Fehlt jedoch für eine solche Änderung das entsprechende NFT, so wird ein entsprechender Fahrzeughalter oder potenzieller Käufer wissen, dass eine unautorisierte Manipulation des Fahrzeugs erfolgte.

Ein Prägen von NFTs ist auch möglich, wenn sich das Fahrzeug in einem bestimmten Ort aufhält. Zur Erfassung des Aufenthaltsorts des Fahrzeugs können verschiedene Methoden eingesetzt werden wie beispielsweise eine GPS-Positionsüberwachung. Hierzu kann das Fahrzeug ein entsprechendes Navigationssystem umfassen oder mit einem mobilen Endgerät wie einem Smartphone oder mobilem Navigationsgerät kommunizieren. Für Videospiele sind sogenannte "Challenges" bekannt. Werden in dem Videospiel bestimmte Leistungen erreicht, so wird dem Spieler eine Trophäe überreicht. Dies lässt sich auch auf Fahrzeuge anwenden. Beispielsweise können NFTs geprägt werden, wenn mit dem Fahrzeug bestimmte Länder oder Städte aufgesucht werden. Dies kann einen Anreiz für einen Fahrzeugnutzer bieten, mehr mit dem eigenen Fahrzeug zu verreisen und verbessert sein Nutzungserlebnis mit dem Fahrzeug. Weitere Orte, die mit dem Prägen eines NFTs einhergehen können, sind beispielsweise das Besuchen bestimmter Sehenswürdigkeiten, Unesco-Weltkulturerbestätten, das Aufsuchen eines bestimmten Sportereignisses, Groundhopping oder dergleichen.

Es lassen sich ferner NFTs prägen, wenn ein bestimmter Zeitpunkt erreicht ist oder eine festgelegte Zeitdauer abgelaufen ist. Beispielsweise kann ein NFT geprägt werden, wenn eine bestimmte Uhrzeit an einem bestimmten Datum erreicht ist, der Fahrzeugbesitzer Geburtstag hat, sich der Zulassungstag oder der Verkaufstag des Fahrzeugs jährt, ein Finanzierungszeitraum abgelaufen ist oder dergleichen.

NFTs können auch geprägt werden, wenn mit dem Fahrzeug eine festgelegte Wegstrecke zurückgelegt wurde, beispielsweise alle 10000 Kilometer, 50000 Kilometer oder 100000 Kilometer und/oder eine bestimmte Anzahl bzw. Kombination von Ereignissen eingetroffen sind, wie das Besuchen von 10 UNESCO-Sehenswürdigkeiten oder der Besuch von 100 Stadien beim Groundhopping. Ein NFT kann dabei auch eine für seine Seltenheit repräsentative Information umfassen, wie ein Bronzestatus, Silberstatus oder Goldstatus. So kann beispielsweise alle 50000 Kilometer ein NFT mit Silberstatus und alle 100000 Kilometer ein NFT mit Goldstatus geprägt werden. Dabei kann auch eine Differenzierung zwischen unterschiedlichen Fahrern des Fahrzeugs getroffen werden.

Dies kann auch dazu genutzt werden, fahrerbezogene NFTs zu prägen, unter Berücksichtigung weiterer fahrzeugbezogener Informationen. Beispielsweise kann ein NFT geprägt werden, wenn der Fahrer X seit zehn 10 Jahren die zulässige Höchstgeschwindigkeit nicht um mehr als beispielsweise 10 km/h überschritten hat.

Generell können NFTs geprägt werden, wenn einzelne Fahrzeugfunktionen eintreffen bzw. genutzt werden oder ausbleiben bzw. nicht genutzt werden. Beispielsweise kann ein NFT geprägt werden, wenn mit dem Fahrzeug 1000 Stunden lang Radio gehört wurde, ein Rücksitz des Fahrzeugs noch nie genutzt wurde, eine Millionen Wischvorgänge mit dem Scheibenwischer des Fahrzeugs durchgeführt wurden, noch nie die Nebelschlussleuchte des Fahrzeugs benutzt wurde oder dergleichen. Durch das Prägen solcher NFTs lässt sich auch der Zustand des Fahrzeugs bewerten, was für Preisverhandlungen beim Weiterverkauf des Fahrzeugs relevant sein kann. Beispielsweise kann bei einem Fahrzeug mit Automatikgetriebe die Anzahl der durchgeführten Kickdowns gezählt werden und beispielsweise alle eintausend Kickdowns ein NFT geprägt werden. Je mehr solcher NFTs für das Fahrzeug geprägt wurden, desto höher ist also sein Verschleiß.

Die für ein bestimmtes Fahrzeug geprägten NFTs lassen sich mit den für andere Fahrzeuge geprägten NFTs vergleichen. Hierdurch lässt sich ein Wettbewerb, eine sogenannte Challenge, abhalten. Beispielsweise kann ein NFT geprägt werden für das Fahrzeug einer Fahrzeugflotte, welches in einem bestimmten Jahr die größte Wegstrecke zurückgelegt hat, am effizientesten betrieben wurde, die meisten Personenkilometer zurückgelegt hat, am schnellsten gefahren ist, am längsten im Stau stand, die längste Nutzungsdauer aufweist, am meisten NFTs mit Goldstatus aufweist oder dergleichen. Auch kann beispielsweise gezählt werden, der wievielte Nutzer eine bestimmte Fahrzeugfunktion nutzt, beispielsweise der tausendste Nutzer von Live Traffic.

Durch das Abhalten solcher Challenges wird das Interesse der Kunden am Fahrzeug erhöht und ein besonders aufregendes Nutzungserlebnis generiert.

Bei einem informationstechnischen System mit einem Fahrzeug, einer zentralen Recheneinheit und einer Prägeeinrichtung sind erfindungsgemäß das Fahrzeug, die zentrale Recheneinheit und die Prägeeinrichtung zur Durchführung eines im vorigen beschriebenen Verfahrens eingerichtet. Das Fahrzeug kann eine oder mehrere Recheneinheiten, die an der Prägung des NFTs aktiv beteiligt sind umfassen. Hierzu zählen besagte Erfassungseinrichtung, Sammeleinrichtung, Aggregiereinrichtung, Wandlungseinrichtung und Übertragungseinrichtung, wobei das Fahrzeug zumindest über eine interne Erfassungseinrichtung, Wandlungseinrichtung und Übertragungseinrichtung verfügt. Eine oder mehrere Erfassungseinrichtungen, Sammeleinrichtungen und/oder Aggregiereinrichtungen können auch fahrzeugextern in der zentralen Recheneinheit vorgesehen sein. Eine Konfiguriereinrichtung zum Konfigurieren der jeweiligen Einrichtungen kann dabei fahrzeugintern oder fahrzeugextern ausgeführt sein. Die Prägeeinrichtung kann ebenfalls Teil der zentralen Recheneinheit sein oder auch durch Dritte betrieben werden. Beispielsweise handelt es sich bei der Prägeeinrichtung um einen Bestandteil einer zur Verwaltung einer mittels Distributed-Ledger-Technologie betriebenen Blockchain verwendeten verteilten Infrastruktur. Die einzelnen Komponenten des informationstechnischen Systems können über verschiedenste bewährte Kommunikationspfade miteinander Daten austauschen.

Eine vorteilhafte Weiterbildung des informationstechnischen Systems umfasst ein mit dem Fahrzeug unmittelbar oder mittelbar über die zentrale Recheneinheit gekoppeltes mobiles Endgerät, wobei eine fahrzeugexterne Erfassungseinrichtung, Sammeleinrichtung und/oder Aggregiereinrichtung auf dem mobilen Endgerät ausgeführt wird. Bei dem mobilen Endgerät handelt es sich beispielsweise um ein Smartphone, Tablet-Computer, Laptop, ein Wearable wie eine Smartwatch oder dergleichen. Eine Koppelung zwischen Fahrzeug und mobilem Endgerät kann kabelgebunden, beispielsweise mittels USB-Kabel und/oder drahtlos, beispielsweise mittels WLAN, Bluetooth, NFC oder dergleichen erfolgen. Auf dem mobilen Endgerät kann eine Software oder Applikation ausgeführt werden, welche die entsprechende Funktionalität einer Erfassungseinrichtung, Sammeleinrichtung und/oder Aggregiereinrichtung durch das mobile Endgerät bereitstellt. Das informationstechnische System ist somit besonders einfach und flexibel erweiterbar.

Weitere vorteilhafte Ausgestaltungen des erfindungsgemäßen Verfahrens zur Prägung und Nutzung fahrzeugbezogener Non-Fungible-Tokens und des hierzu eingesetzten informationstechnischen Systems ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines zum Prägen von Non-Fungible-Tokens verwendeten erfindungsgemäßen informationstechnischen Systems; und
- Fig. 2: ein schematisiertes Ablaufdiagramm eines erfindungsgemäßen Verfahrensablaufs zur Prägung eines Non-Fungible-Tokens.

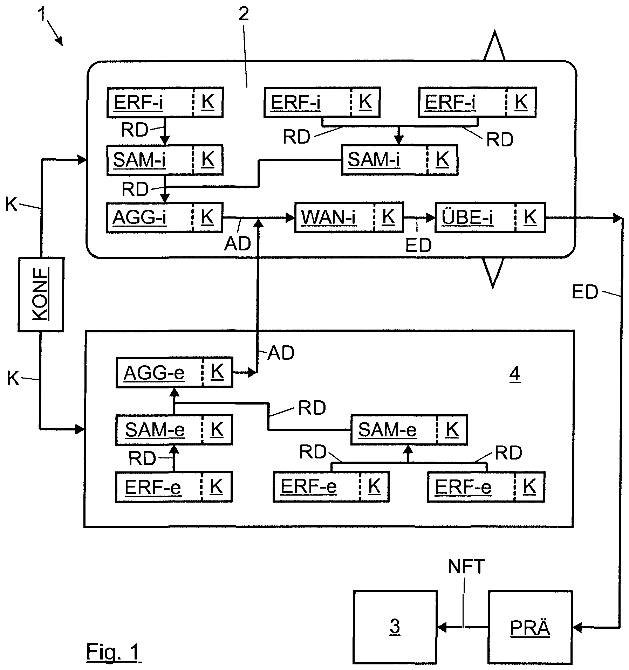

Figur 1 zeigt in einer schematisierten Darstellung ein erfindungsgemäßes informationstechnisches System 1, umfassend ein Fahrzeug 2, eine zentrale Recheneinheit 4, eine Konfiguriereinrichtung KONF, eine Prägeeinrichtung PRÄ und ein Wallet 3 zum Aufbewahren von Non-Fungible-Tokens NFT. Ein Non-Fungible-Token NFT wird dabei jedoch nicht direkt im Wallet 3 aufbewahrt, sondern wird als Informationsblock in einer dezentral verwalteten Blockchain gespeichert. Der Informationsblock enthält dabei einen Identifikator eines einem Nutzer zugeordneten Nutzerkontos. Dieser Identifikator wird typischerweise durch einen öffentlichen Schlüssel ausgebildet. Zum Transferieren eines Non-Fungible-Tokens NFT wird dann der Identifikator eines neuen Nutzers in den Informationsblock des Non-Fungible-Tokens NFT geschrieben. Zur authentifizierten Autorisierung dieses Vorgangs ist ein privater Schlüssel des ursprünglichen Besitzers erforderlich. Dieser private Schlüssel wird im Wallet 3 aufbewahrt.

Mit Hilfe des informationstechnischen Systems 1 ist das Prägen und Nutzen fahrzeugbezogener Non-Fungible-Tokens NFT möglich. Ein solches Non-Fungible-Token NFT umfasst beispielsweise einen Besitznachweis, Nutzungsrechte und/oder Eigenschaften des Fahrzeugs 2. Das Fahrzeug 2 ist mit seinen nicht näher dargestellten internen Systemen und Recheneinheiten Teil des informationstechnischen Systems 1 und an der Prägung des Non-Fungible-Tokens NFT beteiligt. So werden vom Fahrzeug 2 fahrzeugbezogene Daten erhoben, die zum Prägen des Non-Fungible-Tokens NFT verwendet werden.

Zur Erfassung relevanter Daten, beispielsweise von Sensorwerten oder über ein Bussystem des Fahrzeugs 2 ausgelesener Daten, umfassen ein oder mehrere Recheneinheiten des Fahrzeugs 2 eine Erfassungseinrichtung ERF-i. Die Erfassungseinrichtung ERF-i liest entsprechende Sensordaten und/oder Fahrzeugbusse aus und erzeugt hieraus Rohdaten RD. Die Rohdaten RD werden an eine Sammeleinrichtung SAM-i zum Abspeichern weitergeleitet. Dabei kann auch eine Sammeleinrichtung SAM-i von mehreren Erfassungseinrichtungen ERF-i Rohdaten RD erhalten.

Die abgespeicherten Rohdaten RD werden im Folgenden an eine Aggregiereinrichtung AGG-i zur Aufbereitung weitergeleitet. Auch hier kann eine Aggregiereinrichtung AGG-i von einer oder mehreren Sammeleinrichtungen SAM-i Rohdaten RD erhalten. In dem Ausführungsbeispiel in Figur 1 ist für das Fahrzeug 2 lediglich eine Aggregiereinrichtung AGG-i dargestellt. Das Fahrzeug 2 kann jedoch auch mehrere Aggregiereinrichtungen AGG-i enthalten.

Nach einer erfolgreichen Übertragung der Rohdaten RD an die Aggregiereinrichtung AGG-i können die entsprechenden Rohdaten RD aus den Sammeleinrichtungen SAM-i gelöscht werden. Zur Aufbereitung der Rohdaten RD zur Erzeugung Aufbereiteter-Daten AD werden die Rohdaten RD beispielsweise gefiltert, auf ein einheitliches Dateiformat gebracht, sortiert, nicht relevante Daten verworfen, integriert oder in einer sonstigen Art und Weise digital weiterverarbeitet.

Die Aufbereiteten-Daten AD werden dann an eine Wandlungseinrichtung WAN-i übertragen und von dieser in NFT-Eingangsdaten ED gewandelt. Die NFT-Eingangsdaten ED weisen ein entsprechendes zur Prägung von Non-Fungible-Tokens NFT erforderliches Dateiformat auf und umfassen die in ein Non-Fungible-Token NFT zu integrierenden Informationen. Die Prägeeinrichtung PRÄ kann dann die NFT-Eingangsdaten ED einlesen und in unveränderter Form zu einem Non-Fungible-Token NFT prägen. Hierzu werden von der Prägeeinrichtung PRÄ entsprechende Informationsblöcke in die durch eine verteilte Infrastruktur verwaltete Blockchain integriert. Zur Übertragung der NFT-Eingangsdaten ED aus dem Fahrzeug 2 an die Prägeeinrichtung PRÄ sendet das Fahrzeug 2 die NFT-Eingangsdaten ED mittels einer Übertragungseinrichtung ÜBE-i. Beispielsweise können die NFT-Eingangsdaten ED per Mobilfunk an einen Cloudserver übermittelt werden, welcher dann die NFT-Eingangsdaten ED an die zur Verwaltung der Blockchain verwendete verteilte Infrastruktur über das Internet weiterleitet. Der Cloudserver kann dabei selbst auch einen Knoten der verteilten Infrastruktur ausbilden. Ebenso kann die zentrale Recheneinheit 4 den Cloudserver ausbilden oder als Knoten der verteilten Infrastruktur arbeiten.

Nach einer Verarbeitung der entsprechenden NFT-Eingangsdaten ED und Prägen des Non-Fungible-Tokens NFT durch die verteilte Infrastruktur wird dem durch den im Wallet 3 gespeicherten privaten Schlüssel zugänglichen Nutzerkonto der entsprechende Non-Fungible-Token NFT zugeordnet.

Je nach der in einen Non-Fungible-Token NFT zu inkludierenden Informationen können Daten auch von der zentralen Recheneinheit 4, beispielsweise einem Cloudserver oder Backend eines Fahrzeugherstellers, abgegriffen werden. Dies erlaubt die Integration von mit der Verwaltung einer Fahrzeugflotte verknüpften Informationen in ein Non-Fungible-Token NFT. Hierzu umfasst die zentrale Recheneinheit 4 analog zum Fahrzeug 2 wenigstens eine Erfassungseinrichtung ERF-e, eine Sammeleinrichtung SAM-e und eine Aggregiereinrichtung AGG-e. Daraufhin werden die von der in die zentrale Recheneinheit 4 integrierten Aggregiereinrichtung AGG-e erzeugten Aufbereiteten-Daten AD an das Fahrzeug 2 übertragen und in die Wandlungseinrichtung WAN-i eingespeist. Durch das Integrieren des Fahrzeugs 2 in den Prägeprozess eines Non-Fungible-Tokens NFT das von der zentralen Recheneinheit 4 bezogene Daten umfasst, wird in besonders zuverlässiger Art und Weise sichergestellt, dass ein unautorisiertes Prägen von für das Fahrzeug 2 geltenden Non-Fungible-Tokens NFT verhindert wird.

Je nach dem gewünschten zu erstellenden Non-Fungible-Token NFT sind von verschiedenen Einrichtungen für verschiedene Zeiträume unterschiedlichste Daten zu erfassen. Hierzu müssen die einzelnen Einrichtungen wie die Erfassungseinrichtung ERF-i, ERF-e, Sammeleinrichtung SAM-i, SAM-e, Aggregiereinrichtung AGG-i, AGG-e, Wandlungseinrichtung WAN-i und Übertragungseinrichtung ÜBE-i parametriert, das heißt konfiguriert werden. Eine solche Konfiguration erfolgt mittels eines von der Konfiguriereinrichtung KONF erzeugten Konfigurationsdatensatzes K. Die Konfiguriereinrichtung KONF kann fahrzeugintern, in der zentralen Recheneinheit 4 oder auch extern zu diesen beiden Einrichtungen ausgeführt sein, wie dargestellt. Die Tiefe, in wieweit die einzelnen Einrichtungen des informationstechnischen Systems 1 durch die Konfiguriereinrichtung KONF konfiguriert werden, hängt dabei von der Art des zu erstellenden Non-Fungible-Tokens NFT und einem Autorisationsgrad eines die Konfiguriereinrichtung KONF bedienenden Nutzers ab. So kann ein Laie beispielsweise vorgefertigte Konfigurationsprofile aus einer Liste vorgefertigter Konfigurationsdatensätze auswählen. Ein Experte wird, sollte dies erwünscht oder erforderlich sein, jedoch bis auf ein Programmierlevel hinab Detaileinstellungen an den einzelnen Einrichtungen vornehmen können.

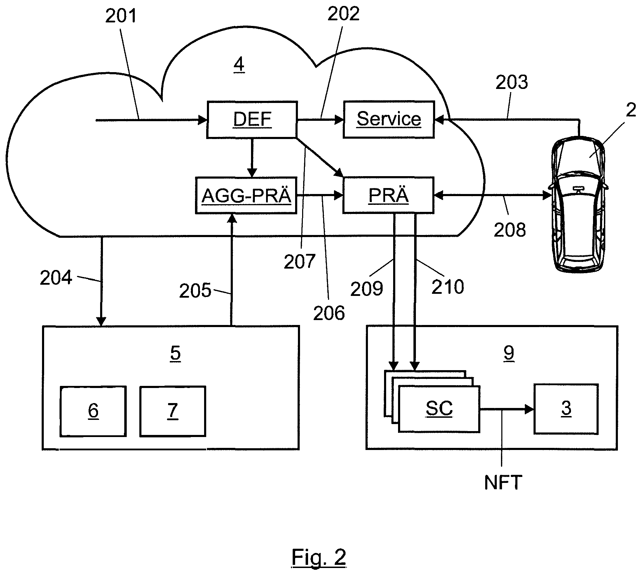

Figur 2 zeigt das schematisierte Ablaufdiagramm eines erfindungsgemäßen Verfahrensablaufs zur Prägung eines Non-Fungible-Tokens NFT. In einem durch einen Pfeil angedeuteten Verfahrensschritt 201 definiert ein Administrator der zentralen Recheneinheit 4, welche Arten von Non-Fungible-Tokens NFT ausgestellt werden können. Hieraus wird ein Definitionsdatensatz DEF erzeugt, welcher die NFT-Definitionen inklusive Konfiguration und Einstellungen der einzelnen Einrichtungen umfasst.

Aus dem Definitionsdatensatz DEF wird in einem Verfahrensschritt 202 eine Liste mit den prägbaren Non-Fungible-Tokens NFT erzeugt. Diese werden zur Ausgabe an einen NFT-Service Service bereitgestellt.

In einem Verfahrensschritt 203 gestattet ein Nutzer die Teilnahme seines Fahrzeugs 2 an dem NFT-Service Service und wählt die gewünschten zu prägenden Non-Fungible-Tokens NFT aus.

In einem Verfahrensschritt 204 werden für alle Fahrzeuge 2, für die Non-Fungible-Tokens NFTs gewünscht sind, Daten übermittelt, welche den jeweiligen Fahrzeugen 2 mitteilen, welche Rohdaten RD zu Erzeugung der entsprechenden Non-Fungible-Tokens NFT gesammelt werden müssen und wie diese weiterverarbeitet werden sollen. Die entsprechenden Informationen werden durch ein erstes verteiltes System 5, welches die Fahrzeuge 2 und die zentrale Recheneinheit 4 umfasst, gewonnen. Mobile Endgeräte wie bspw. ein Smartphone können ebenfalls Teil des ersten verteilten Systems 5 sein. Die Erfassung der Rohdaten RD ist durch eine Box 6 symbolisiert und die Verarbeitung der Rohdaten RD zu NFT-Eingangsdaten ED durch eine Box 7.

Im Verfahrensschritt 205 werden die NFT-Eingangsdaten ED mittels der fahrzeuginternen Übertragungseinrichtung ÜBE-i an die Prägeeinrichtung PRÄ übermittelt. In dem Ausführungsbeispiel in Figur 2 erfolgt die Datenübertragung mittelbar über eine in die zentrale Recheneinheit 4 integrierte Aufbereitungseinrichtung AGG-PRÄ. So können mittels der Aufbereitungseinrichtung AGG-PRÄ mehrere Datensätze von NFT-Eingangsdaten ED zusammengefasst werden und dann im Verfahrensschritt 206 an die Prägeeinrichtung PRÄ übergeben werden. Die Prägeeinrichtung PRÄ kann dabei auch Teil eines zweiten verteilten Systems 9 sein, welches die einem entsprechenden Non-Fungible-Token NFT zugrunde liegende Blockchain verwaltet. Im Verfahrensschritt 207 wird die Prägeeinrichtung PRÄ entsprechend dem Definitionsdatensatz DEF konfiguriert.

Im Verfahrensschritt 208 stellt das Fahrzeug 2 eine Anfrage, ob Non-Fungible-Token NFT erhalten werden können oder gibt automatisch eine Benachrichtigung aus, dass Non-Fungible-Token NFT ausgestellt werden können.

Im Verfahrensschritt 209 werden durch die Prägeeinrichtung PRÄ schließlich gemäß der NFT-Eingangsdaten ED zu erzeugende Non-Fungible-Token NFT durch das Inkludieren entsprechender Informationsblöcke in die jeweilige zugrundeliegende Blockchain geprägt. Hierzu werden intelligente Verträge SC, auch als Smart Contracts bezeichnet, unterzeichnet. Im Verfahrensschritt 210 stößt die Prägeeinrichtung PRÄ den Transfer der geprägten Non-Fungible-Token NFT an das Wallet 3 des Nutzers an.

## Patentansprüche

1. Verfahren zur Prägung und Nutzung fahrzeugbezogener Non-Fungible-Tokens (NFT), wobei ein informationstechnisches System (1) wenigstens ein einem Fahrzeug (2) zugeordnetes Non-Fungible-Token (NFT) prägt, das zumindest einen Besitznachweis, Nutzungsrechte und/oder Eigenschaften des Fahrzeugs (2) umfasst, wobei wenigstens eine fahrzeuginterne Erfassungseinrichtung (ERF-i) fahrzeugbezogene Rohdaten (RD) erfasst, eine fahrzeuginterne und/oder eine fahrzeugexterne Sammeleinrichtung (SAM-i, SAM-e) zumindest eine Teilmenge der Rohdaten (RD) abspeichert, und wobei zumindest eine Teilmenge abgespeicherter Rohdaten (RD) aufbereitet werden, Aufbereitete-Daten (AD) in NFT-Eingangsdaten (ED) gewandelt werden und ein Non-Fungible-Token (NFT) unter Einbezug der NFT-Eingangsdaten geprägt wird,
**dadurch gekennzeichnet, dass**
eine fahrzeuginterne und/oder eine fahrzeugexterne Aggregiereinrichtung (AGG-i, AGG-e) zumindest eine Teilmenge abgespeicherter Rohdaten (RD) aufbereitet, eine fahrzeuginterne Wandlungseinrichtung (WAN-i) Aufbereitete-Daten (AD) in NFT-Eingangsdaten (ED) wandelt, eine fahrzeuginterne Übertragungseinrichtung (ÜBE-i) die NFT-Eingangsdaten (ED) an eine fahrzeugexterne Prägeeinrichtung (PRÄ) übermittelt, welche einen der Non-Fungible-Tokens (NFT) unter Einbeziehen der NFT-Eingangsdaten in unveränderter Form prägt, wobei
in einem der Non-Fungible-Token (NFT) die zur Produktion eines Fahrzeugs (2) konfigurierbaren Eigenschaften inkludiert werden und für ein Fahrzeug (2) mit einer einmaligen Eigenschafts-Kombination die Produktion eines weiteren der einmaligen Eigenschafts-Kombination entsprechenden Fahrzeugs (2) unterbunden wird, und wobei ein solches Non-Fungible Token (NFT) bei der Herstellung des Fahrzeugs (2) geprägt wird.

2. Verfahren nach Anspruch 1,
**dadurch gekennzeichnet, dass**
wenigstens eine fahrzeugexterne Erfassungseinrichtung (ERF-e) in den Prozess zur Erzeugung Aufbereiteter-Daten (AD) eingebunden ist.

3. Verfahren nach Anspruch 1 oder 2,
**dadurch gekennzeichnet, dass**
wenigstens zwei separate Fahrzeuguntersysteme jeweils über eine eigene Aggregiereinrichtung (AGG-i) verfügen und in einem jeweiligen Fahrzeuguntersystem erfasste Rohdaten (RD) durch die jeweilige Aggregiereinrichtung (AGG-i) des Fahrzeuguntersystems aufbereitet werden.

4. Verfahren nach einem der Ansprüche 1 bis 3,
**dadurch gekennzeichnet, dass**
Aufbereitete-Daten (AD) in der Aggregiereinrichtung (AGG-i, AGG-e) temporär zwischengespeichert werden, bevor diese an die Wandlungseinrichtung (WAN-i) übermittelt werden.

5. Verfahren nach einem der Ansprüche 1 bis 4,
**dadurch gekennzeichnet, dass**
mittels einer Konfiguriereinrichtung (KONF) ein Konfigurationsdatensatz (K) erzeugt wird, welcher eine Konfigurierung für eine jeweilige Erfassungseinrichtung (ERF-i, ERF-e), Sammeleinrichtung (SAM-i, SAM-e), Aggregiereinrichtung (AGG-i, AGG-e), Wandlungseinrichtung (WAN-i) und/oder Übertragungseinrichtung (ÜBE-i) umfasst, die von einer jeweiligen Einrichtung (ERF-i, ERF-e, SAM-i, SAM-e, AGG-i, AGG-e, WAN-i, ÜBE-i) eingelesen wird, um das Verhalten einer jeweiligen Einrichtung (ERF-i, ERF-e, SAM-i, SAM-e, AGG-i, AGG-e, WAN-i, ÜBE-i) zur Prägung eines bestimmten Non-Fungible-Tokens (NFT) zu steuern.

6. Verfahren nach Anspruch 5,
**dadurch gekennzeichnet, dass**
ein Konfigurationsdatensatz (K) zumindest eine der folgenden Informationen umfasst:
- eine Definition der zu Erzeugenden NFT-Eingangsdaten (ED);
- eine Definition von Ereignissen, wann ein Non-Fungible-Token (NFT) geprägt werden soll;
- eine Definition der zu erfassenden Rohdaten (RD);
- eine Definition einer von einer Aggregiereinrichtung (AGG-i, AGG-e) zur Aufbereitung der Rohdaten (RD) eingesetzten Aggregierfunktion; und/oder
- eine Definition einer von der Wandlungseinrichtung (WAN-i) zur Wandlung der Aufbereiteten-Daten (AD) in NFT-Eingangsdaten (ED) eingesetzten Wandlungsfunktion.

7. Verfahren nach Anspruch 5 oder 6,
**dadurch gekennzeichnet, dass**
ein vordefinierter Konfigurationsdatensatz (K) aus einer Liste vordefinierter Konfigurationsdatensätze (K) von der Konfiguriereinrichtung (KONF) erzeugt und von den Einrichtungen (ERF-i, ERF-e, SAM-i, SAM-e, AGG-i, AGG-e, WAN-i, ÜBE-i) eingelesen wird.

8. Verfahren nach einem der Ansprüche 1 bis 7,
**dadurch gekennzeichnet, dass**
ein Nutzer das Prägen eines der Non-Fungible-Tokens (NFT) manuell initiiert oder vor einer automatischen Prägung eines der Non-Fungible-Tokens (NFT) eine Abfrage zur Bestätigung der Prägung des Non-Fungible-Tokens (NFT) an den Nutzer gestellt wird.

9. Verfahren nach einem der Ansprüche 1 bis 8,
**dadurch gekennzeichnet, dass**
ein privater Schlüssel, mit dessen Hilfe eine Transaktion eines der Non-Fungible-Tokens (NFT) an Dritte veranlassbar ist, in einem fahrzeuginternen Hardwarewallet und/oder in einem Wallet (3), auf welches aus dem Fahrzeug (2) heraus Zugriff besteht, gespeichert wird.

10. Verfahren nach einem der Ansprüche 1 bis 9,
**dadurch gekennzeichnet, dass**
bei Eintreffen zumindest eines der folgenden Ereignisse ein Non-Fungible-Token (NFT) geprägt wird:
- Verkauf des Fahrzeugs (2);
- Durchführen einer Reparatur oder Wartung am Fahrzeug (2);
- Aufenthalt, mit dem Fahrzeug (2), an einem festgelegten Ort;
- Erreichen eines festgelegten Zeitpunkts oder Verstreichen einer festgelegten Zeitdauer;
- Zurücklegen, mit dem Fahrzeug (2), einer festgelegten Wegstrecke;
- Eintreffen oder Ausbleiben einer bestimmten Fahrzeugfunktion; und/oder
- Übertreffen oder Unterschreiten einer Fahrzeugleistung im Vergleich zu einer jeweiligen Fahrzeugleistung der Fahrzeuge (2) einer Fahrzeugflotte.

11. Informationstechnisches System (1) mit einem Fahrzeug (2), einer zentralen Recheneinheit (4) und einer Prägeeinrichtung (PRÄ),
**dadurch gekennzeichnet, dass**
das Fahrzeug (2), die zentrale Recheneinheit (4) und die Prägeeinrichtung (PRÄ) zur Durchführung eines Verfahrens nach einem der Ansprüche 1 bis 10 eingerichtet sind.

12. Informationstechnisches System (1) nach Anspruch 11,
**gekennzeichnet durch**
ein mit dem Fahrzeug (2) unmittelbar oder mittelbar über die zentrale Recheneinheit (4) gekoppeltes mobiles Endgerät, wobei eine fahrzeugexterne Erfassungseinrichtung (ERF-e), Sammeleinrichtung (SAM-e) und/oder Aggregiereinrichtung (AGG-e) auf dem mobilen Endgerät ausgeführt wird.

## Claims

1. Method for minting and using vehicle-related non-fungible tokens (NFTs), wherein an information technology system (1) mints at least one non-fungible token (NFT) which is assigned to a vehicle (2) and comprises at least proof of ownership, rights of use, and/or properties of the vehicle (2), wherein at least one vehicle-internal detection device (ERF-i) detects vehicle-related raw data (RD), a vehicle-internal and/or vehicle-external collection device (SAM-i, SAM-e) stores at least a subset of the raw data (RD), and wherein at least a subset of stored raw data (RD) is prepared, prepared data (AD) are converted into NFT input data (ED), and a non-fungible token (NFT) is minted using the NFT input data,
**characterized in that**
a vehicle-internal and/or vehicle-external aggregation device (AGG-i, AGG-e) prepares at least a subset of stored raw data (RD), a vehicle-internal conversion device (WAN-i) converts prepared data (AD) into NFT input data (ED), a vehicle-internal transmission device (ÜBE-i) transmits the NFT input data (ED) to a vehicle-external minting device (PRÄ), which mints one of the non-fungible tokens (NFT) incorporating the NFT input data in an unmodified form, wherein
the properties that can be configured for the production of a vehicle (2) are included in one of the non-fungible tokens (NFT) and, for a vehicle (2) having a unique combination of properties, the production of another vehicle (2) corresponding to the unique combination of properties is prevented, and wherein such a non-fungible token (NFT) is minted during the production of the vehicle (2).

2. Method according to claim 1,
**characterized in that**
at least one vehicle-external detection device (ERF-e) is integrated into the process for generating prepared data (AD).

3. Method according to claim 1 or 2,
**characterized in that**
at least two separate vehicle subsystems each have their own aggregation device (AGG-i), and raw data (RD) detected in a relevant vehicle subsystem are prepared by the relevant aggregation device (AGG-i) of the vehicle subsystem.

4. Method according to any of claims 1 to 3,
**characterized in that**
prepared data (AD) are temporarily stored in the aggregation device (AGG-i, AGG-e) before they are transmitted to the conversion device (WAN-i).

5. Method according to any of claims 1 to 4,
**characterized in that**
a configuration dataset (K) is generated by means of a configuration device (KONF), which dataset comprises a configuration for a relevant detection device (ERF-i, ERF-e), collection device (SAM-i, SAM-e), aggregation device (AGG-i, AGG-e), conversion device (WAN-i) and/or transmission device (ÜBE-i), which is read in by a relevant device (ERF-i, ERF-e, SAM-i, SAM-e, AGG-i, AGG-e, WAN-i, ÜBE-i) in order to control the behavior of a relevant device (ERF-i, ERF-e, SAM-i, SAM-e, AGG-i, AGG-e, WAN-i, ÜBE-i) to mint a specific non-fungible token (NFT).

6. Method according to claim 5,
**characterized in that**
a configuration dataset (K) comprises at least one of the following items of information:
- a definition of the NFT input data (ED) to be generated;
- a definition of events when a non-fungible token (NFT) is to be minted;
- a definition of the raw data (RD) to be detected;
- a definition of an aggregation function used by an aggregation device (AGG-i, AGG-e) to prepare the raw data (RD); and/or
- a definition of a conversion function used by the conversion device (WAN-i) to convert the prepared data (AD) into NFT input data (ED).

7. Method according to claim 5 or 6,
**characterized in that**
a predefined configuration dataset (K) is generated from a list of predefined configuration datasets (K) by the configuration device (KONF), and is read in by the devices (ERF-i, ERF-e, SAM-i, SAM-e, AGG-i, AGG-e, WAN-i, ÜBE-i).

8. Method according to any of claims 1 to 7,
**characterized in that**
a user manually initiates the minting of one of the non-fungible tokens (NFT) or, before one of the non-fungible tokens (NFT) is automatically minted, the user is requested to confirm the minting of the non-fungible token (NFT).

9. Method according to any of claims 1 to 8,
**characterized in that**
a private key, by means of which a transaction of one of the non-fungible tokens (NFT) to third parties can be initiated, is stored in a vehicle-internal hardware wallet and/or in a wallet (3) which can be accessed from the vehicle (2).

10. Method according to any of claims 1 to 9,
**characterized in that**
a non-fungible token (NFT) is minted if at least one of the following events occurs:
- sale of the vehicle (2);
- repairs or maintenance is carried out on the vehicle (2);
- the vehicle (2) stops at a specified location;
- a specified time is reached or a specified period of time elapses;
- the vehicle (2) covers a specified distance;
- a specific vehicle function occurs or is absent; and/or
- vehicle performance in comparison to a relevant vehicle performance of the vehicles (2) in a vehicle fleet is exceeded or not met.

11. Information technology system (1) comprising a vehicle (2), a central processing unit (4) and a minting device (PRÄ),
**characterized in that**
the vehicle (2), the central processing unit (4) and the minting device (PRÄ) are designed to carry out a method according to any of claims 1 to 10.

12. Information technology system (1) according to claim 11,
**characterized by**
a mobile terminal which is coupled to the vehicle (2) directly or indirectly via the central processing unit (4), wherein a vehicle-external detection device (ERF-e), a collection device (SAM-e) and/or an aggregation device (AGG-e) is implemented on the mobile terminal.

## Revendications

1. Procédé d'émission et d'utilisation de jetons non fongibles (NFT) associés à un véhicule, dans lequel un système de technologie d'informations (1) émet au moins un jeton non fongible (NFT) attribué à un véhicule (2), qui comprend au moins une preuve de propriété, des droits d'utilisation et/ou des propriétés du véhicule (2), dans lequel au moins un dispositif de détection (ERF-i) interne au véhicule détecte des données brutes (RD) associées au véhicule, un dispositif de collecte (SAM-i, SAM-e) interne au véhicule et/ou externe au véhicule mémorise au moins une quantité partielle des données brutes (RD), et dans lequel au moins une quantité partielle de données brutes (RD) mémorisées est préparée, des données préparées (AD) sont converties en données d'entrée NFT (ED) et un jeton non fongible (NFT) est émis en tenant compte des données d'entrée NFT, **caractérisé en ce que**
un dispositif d'agrégation interne au véhicule et/ou externe au véhicule (AGG-i, AGG-e) prépare au moins une quantité partielle de données brutes (RD) mémorisées, un dispositif de conversion (WAN-i) interne au véhicule convertit des données préparées (AD) en données d'entrée NFT (ED), un dispositif de transmission (ÜBE-i) interne au véhicule transmet les données d'entrée NFT (ED) à un dispositif d'émission (PRÄ) externe au véhicule, qui émet l'un des jetons non-fongibles (NFT) en intégrant les données d'entrée NFT sous une forme non modifiée, dans lequel des propriétés pouvant être configurées pour la production d'un véhicule (2) sont incluses dans l'un des jetons non fongibles (NFT) et pour un véhicule (2) comportant une combinaison de propriétés unique, la production d'un autre véhicule (2) correspondant à la combinaison de propriétés unique est évitée, et dans lequel un tel jeton non fongible (NFT) est émis lors de la fabrication du véhicule (2).

2. Procédé selon la revendication 1,
**caractérisé en ce que**
au moins un dispositif de détection (ERF-e) externe au véhicule est intégré dans le processus de génération de données préparées (AD).

3. Procédé selon la revendication 1 ou 2,
**caractérisé en ce que**
au moins deux sous-systèmes de véhicule séparés disposent respectivement d'un dispositif d'agrégation (AGG-i) propre et des données brutes (RD) détectées dans un sous-système de véhicule respectif sont préparées par le dispositif d'agrégation (AGG-i) respectif du sous-système de véhicule.

4. Procédé selon l'une des revendications 1 à 3,
**caractérisé en ce que**
des données préparées (AD) sont temporairement mémorisées dans le dispositif d'agrégation (AGG-i, AGG-e) avant d'être transmises au dispositif de conversion (WAN-i).

5. Procédé selon l'une des revendications 1 à 4,
**caractérisé en ce que**
un jeu de données de configuration (K) est généré par le biais d'un dispositif de configuration (KONF), qui comprend une configuration pour un dispositif de détection (ERF-i, ERF-e), un dispositif de collecte (SAM-i, SAM-e), un dispositif d'agrégation (AGG-i, AGG-e), un dispositif de conversion (WAN-i) et/ou un dispositif de transmission (ÜBE-i) respectifs, qui est lu par un dispositif (ERF-i, ERF-e, SAM-i, SAM-e, AGG-i, AGG-e, WAN-i, ÜBE-i) respectif afin de commander le comportement d'un dispositif (ERF-i, ERF-e, SAM-i, SAM-e, AGG-i, AGG-e, WAN-i, ÜBE-i) respectif pour l'émission d'un jeton non fongible (NFT) déterminé.

6. Procédé selon la revendication 5,
**caractérisé en ce que**
un jeu de données de configuration (K) comprend au moins une des informations suivantes :
- une définition des données d'entrée NFT (ED) à générer ;
- une définition des événements à partir desquels un jeton non fongible (NFT) doit être émis ;
- une définition des données brutes (RD) à détecter ;
- une définition d'une fonction d'agrégation utilisée par un dispositif d'agrégation (AGG-i, AGG-e) pour préparer les données brutes (RD) ; et/ou
- une définition d'une fonction de conversion utilisée par le dispositif de conversion (WAN-i) pour convertir les données préparées (AD) en données d'entrée NFT (ED).

7. Procédé selon la revendication 5 ou 6,
**caractérisé en ce que**
un jeu de données de configuration (K) prédéfini est généré à partir d'une liste de jeux de données de configuration (K) prédéfinis par le dispositif de configuration (KONF) et est lu par les dispositifs (ERF-i, ERF-e, SAM-i, SAM-e, AGG-i, AGG-e, WAN-i, ÜBE- i).

8. Procédé selon l'une des revendications 1 à 7,
**caractérisé en ce que**
un utilisateur lance manuellement l'émission d'un des jetons non fongibles (NFT) ou, avant une émission automatique d'un des jetons non fongibles (NFT), une demande de confirmation de l'émission du jeton non fongible (NFT) est adressée à l'utilisateur.

9. Procédé selon l'une des revendications 1 à 8,
**caractérisé en ce que**
une clé privée, à l'aide de laquelle une transaction de l'un des jetons non fongibles (NFT) à des tiers peut être provoquée, est stockée dans un portefeuille matériel interne au véhicule et/ou dans un portefeuille (3) auquel il est possible d'accéder à partir du véhicule (2).

10. Procédé selon l'une des revendications 1 à 9,
**caractérisé en ce que**
un jeton non fongible (NFT) est émis lorsqu'au moins l'un des événements suivants se produit :
- vente du véhicule (2) ;
- réalisation d'une réparation ou un d'entretien sur le véhicule (2) ;
- séjour, avec le véhicule (2), à un endroit défini ;
- atteinte d'un moment défini ou écoulement d'une durée définie ;
- parcours, avec le véhicule (2), d'une distance définie ;
- apparition ou absence d'une fonction de véhicule déterminée ; et/ou
- dépassement vers le haut ou vers le bas d'une puissance de véhicule par comparaison avec une puissance de véhicule respective des véhicules (2) d'une flotte de véhicules.

11. Système de technologie d'informations (1) comportant un véhicule (2), une unité centrale de calcul (4) et un dispositif d'émission (PRÄ),
**caractérisé en ce que**
le véhicule (2), l'unité centrale de calcul (4) et le dispositif d'émission (PRÄ) sont conçus pour la réalisation d'un procédé selon l'une des revendications 1 à 10.

12. Système de technologie d'informations (1) selon la revendication 11,
**caractérisé par**
un terminal mobile couplé au véhicule (2) directement ou indirectement par l'intermédiaire de l'unité centrale de calcul (4), dans lequel un dispositif d'acquisition (ERF-e), un dispositif de collecte (SAM-e) et/ou un dispositif d'agrégation (AGG-e) externes au véhicule sont exécutés sur le terminal mobile.
